# EUROPÄISCHE PATENTANMELDUNG

(11) **EP 1 251 256 A1**
(43) Veröffentlichungstag der Anmeldung: **23.10.2002**
(21) Anmeldenummer: 01202977.3
(22) Anmeldetag: 06.08.2001
(51) Int. Cl.: F02C 3/05, F02C 3/10, F02C 3/055

(54) **Gasturbine**

(30) Priorität: 17.04.2001 EP 01109293
(71) Anmelder: Fehrs, Heinz, Dipl.-Ing., 30453 Hannover (DE)
(72) Erfinder: Fehrs, Heinz, Dipl.-Ing., 30453 Hannover (DE)

(57) **Zusammenfassung**

Es wird eine Gasturbine beschrieben, die aus folgenden Komponenten besteht:
einer Drucklufterzeugungsanlage mit in Serie geschalteten Zentrifugallüfterreihen, einer Brennkammer mit Kraftstoffzufuhr und Zündeinrichtung, sowie einem auf derselben Welle angebrachten Teil einer Abgasturbine als Antrieb für die Drucklufterzeugungsanlage, und
aus einer nicht mit der Welle der Druckluftanlage verbundenen Abgasturbine als Abtriebsmotor.

## Beschreibung

Der Motor besteht aus einem Drucklufterzeuger, aus einer Brennkammer mit Kraftstoffzufuhr und Zündeinrichtung und aus einer zweiteiligen Abgasturbine. Ein kleiner Teil der Abgasturbine treibt einen Zentrifugallüfter für die Drucklufterzeugung an, der wellenmässig getrennte Hauptteil der Abgasturbine erbringt die Abtriebsleistung. Von den heißen Brenngasen wird hauptsächlich die Volumenvergrößerung und nicht die Druckerhöhung ausgenutzt.

Die größtmögliche Kraftstoffmengenzufuhr sollte für die Höchstleistung des Motors begrenzt sein. Eine Überschreitung der höchstzulässigen Betriebsdrehzahl der Lüfterturbine wird dadurch vermieden. Die heißen Gase durchströmen den zum Lüfter gehörenden Teil der Abgasturbine und liefern die der Verbrennung angepasste Luftmenge. Anschließend gelangen sie in den Hauptteil der Abgasturbine zur Umwandlung ihrer Wärmeenergie in Drehenergie. Eine Änderung der Motorleistung wird durch Änderung der Kraftstoffmenge bewirkt. Das Drehmoment der Luftturbine ändert sich entsprechend und passt die erforderliche Luftmenge selbsttätig an.

Im Zentrifugallüfter ändert sich die Luftmenge mehr als proportional zur Drehzahl und kann nur im oberen Drehzahlbereich wirkungsvoll geregelt werden. Die Hauptabgasturbine erhält durch ihre nicht mit der Lüfterwelle verbundene eigene Welle eine durch die Trennung ermöglichte separate Erzeugung der Treibgasmenge. Jede Drehzahl ihres großen Drehzahlbereichs erhält damit ein der abgeforderten Leistung entsprechendes Drehmoment.

Die Luft- und Abgasleitschaufeln sind in ihrer Wirkungsweise durch Leitschaufeln im Gehäuse zu unterstützen, dass sie die Drehenergie der rotierenden Luft- und Abgasmassen hinter den Leitschaufeln nutzbar machen. Alle Schaufelreihen werden von den Nachbarreihen durch Labyrinthe getrennt.

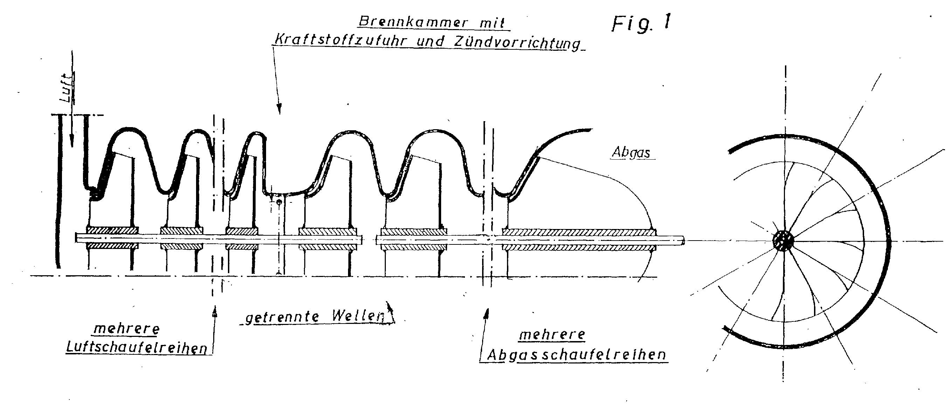

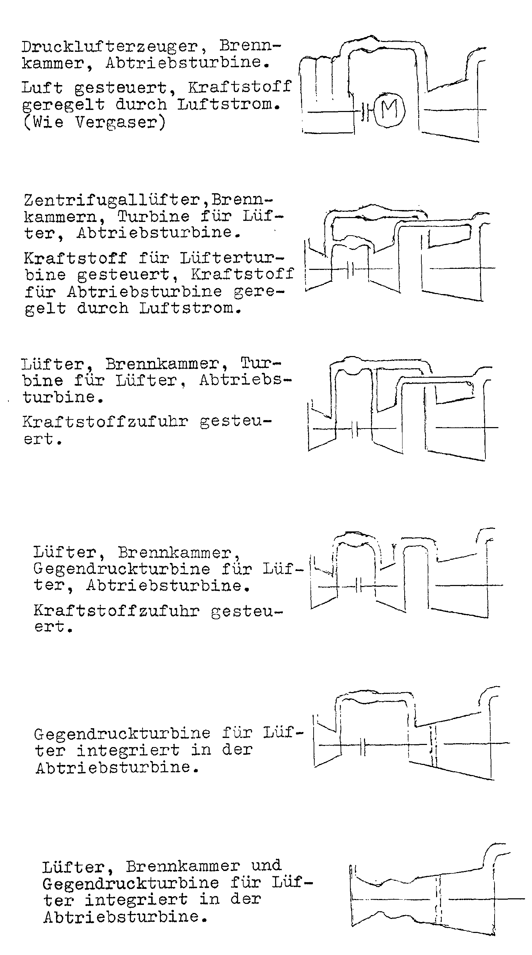

Bei Rückgang der abgeforderten Leistung bis zur geringstmöglichen Brennstoffmenge entwickelt die Abgasturbine nur geringe Bremswirkung. Bei Talfahrt eines Kraftfahrzeugs kann es erforderlich werden die Brennstoffzufuhr ganz abzustellen, wobei die Abgasturbine durch die Luft des vorgeschalteten Lüfters etwas gebremst wird. Sollte die Drehzahl noch weiter ansteigen kann eine Vorrichtung nützlich sein, die Luft ungehindert in den Eingang der Abgasturbine gelangen lässt und diese durch Kompressorwirkung bremst. Alle Maßnahmen zur Vermeidung gefährlicher Überdrehzahlen müssen rangfolgemässig automatisch erfolgen mit genügendem Abstand zur Berstdrehzahl (Vgl. Fig.1).

Bei Betrieb ohne große Drehzahländerungen z.B. Antrieb eines Stromgenerators können Lüfter- und Abgasturbine auf einer ungeteilten Welle angeordnet werden. Das Gleiche ist möglich bei Arbeitsmaschinen bei denen die Leistung mehr als proportional zur Drehzahl steigt, z.B. Kreiselpumpen und Lüfter.

## Patentansprüche

1. Die Neuigkeit dieses Verbrennungsmotors besteht darin dass:
1.) eine Abgasturbine von einer Drucklufterzeugungsanlage über eine mit Kraftstoff gespeiste Brennkammer betrieben wird.
2.) von der Abgasturbine abgetrennt eine oder wenige Schaufelreihen unabhängig von der Drehzahl der Arbeitsturbine einen Zentrifugallüfter zur Erzeugung der Brennerluft antreiben. Die Arbeitsturbine erhält dadurch für jede Drehzahl ihres großen Drehzahlbereichs ein bedarfsbedingtes Drehmoment (Vgl. Fig. 1).
3.) Zentrifügallüfter und Arbeitsturbine eine ungeteilte gemeinsame Welle haben können, wenn sie Arbeitsmaschinen mit konstanter Drehzahl oder mit mehr als proportional zu Drehzahl steigendem Leistungsbedarf antreiben, z.B. Stromgeneratoren, Zentrifugalpumpen, Lüfter u.s.w.).
4.) die Drucklufterzeugungsanlage mit ihrem Abgasturbinenanteil separat angeordnet ist und kein gemeinsames Gehäuse mit der Arbeitsturbine hat. Die Brenngase müssen in geeigneter Art der Arbeitsturbine zugeführt werden.
5.) die Druckluft durch andere Kompressoren als durch Zentrifugallüfter sowie auch durch andere Antriebe erzeugt wird.
